# EUROPEAN PATENT APPLICATION

(11) **EP 4 822 931 A1**
(43) Date of publication of application: **14.10.2026**
(21) Application number: 25168877.6
(22) Date of filing: 07.04.2025
(51) Int. Cl.: H02J 1/00, H02J 3/32, H02J 4/00, H02J 7/00

(54) **AN ENERGY STORAGE ARRANGEMENT**

(71) Applicant: Enico Oy, 33840 Tampere (FI)
(72) Inventor: LÄHTEENMÄKI, Marko, Tampere (FI); REPONEN, Marko, Tampere (FI)
(74) Representative: Berggren Oy

(57) **Abstract**

An energy storage arrangement (1) according to the invention comprising several energy storage modules (2, 3, 4, 5). Each module of the example comprises a battery unit (7A, 7B, 7C, 7D) and an inverter (8A, 8B, 8C, 8D). Each module comprises also a AC busbar system (9A, 9B, 9C, 9D). The busbar systems of the energy storage modules are connected together. Each energy storage module further comprises a DC current busbar system (11AA, 11AB, 11AC, 11AD) whereto the battery unit (7A, 7B, 7C, 7D) is connected to.

## Description

### Field of technology

The invention relates to energy storage arrangements. Especially the invention relates to energy storage arrangements comprising energy storage modules.

### Prior art

There are different energy storages. Energy storages are used to store energy and release it when needed. Energy can be economically stored in an energy storage from the electrical grid when the price of electricity is low. Similarly, the energy stored in the energy storage can be used in electrical loads or the electrical grid, for example, when the price of electricity is high.

An energy storage system can be a modular, as presented in US 10404039. Energy storage modules can be connected to each other to achieve the desired energy storage capacity. Energy storage modules have conductor rail systems that can be connected to the corresponding conductor rail systems of other energy storage modules. The structure of the conductor rails system can be relatively space consuming.

### Short description

The object of the invention is to provide an alternative structure for the energy storage arrangement having energy storage modules. The object is achieved in a way described in the independent claim. Dependent claims illustrate different embodiments of the invention.

An energy storage arrangement according to the invention comprises energy storage modules. The energy storage modules comprise a battery unit an inverter and a busbar system. The busbar systems of the energy storage modules are connected together. The busbar system of each energy storage module is an AC current busbar system, and each energy storage module further comprises a DC current busbar system whereto the battery unit is connected to. The inverter unit of each energy storage module is connected to the DC current busbar system and the AC current busbar system. One of the energy storage modules is a master module comprising a control unit, and the other module/s is/are a submodule/s. The master module is arranged to control functioning of all energy storage modules and also arranged to be connectable to an outside system.

### List of figures

In the following, the invention is described in more detail by reference to the enclosed drawings, where
- Figure 1: illustrates a schematic example of an energy storage arrangement comprising several energy storage modules,
- Figure 2: illustrates another schematic example of an energy storage arrangement comprising several energy storage modules,
- Figure 3: illustrates an example of an energy storage arrangement when all inverters are running,
- Figure 4: illustrates an example of an energy storage arrangement when some of the inverters are running,
- Figure 5: illustrates another example of an energy storage arrangement when some of the inverters are running, and
- Figure 6: illustrates an example of a busbar comprising conductor bars.

### Description of the invention

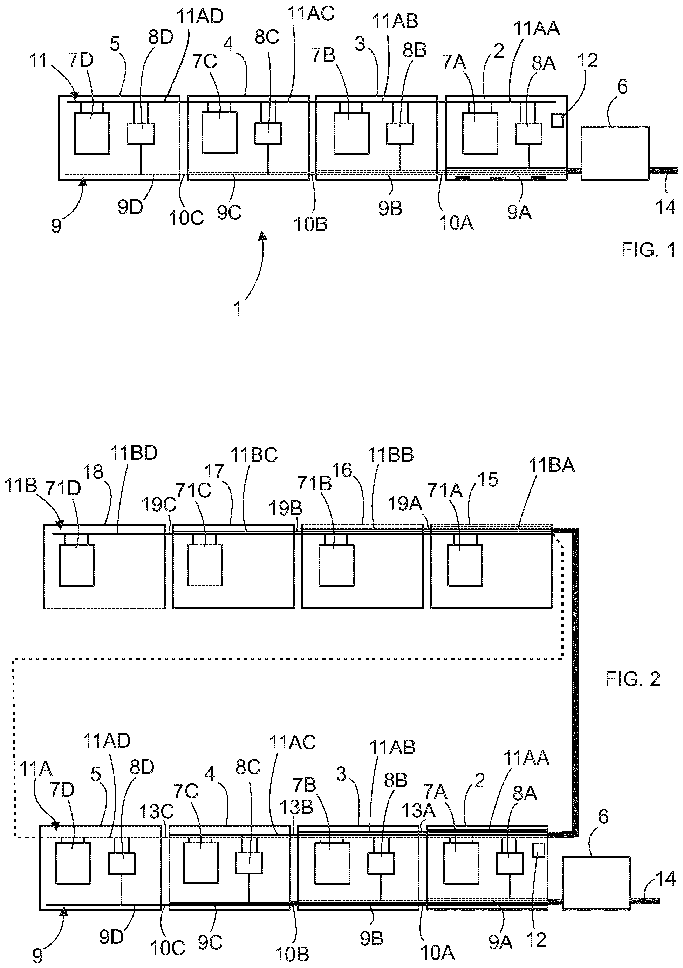

Figure 1 illustrates a schematic example of an energy storage arrangement 1 according to the invention comprising several energy storage modules 2, 3, 4, 5. Each module of the example comprises a battery unit 7A, 7B, 7C, 7D and an inverter 8A, 8B, 8C, 8D. The battery units may comprise one or more batteries depending on an implementation of the battery unit. Each module comprises also a busbar system 9A, 9B, 9C, 9D. The busbar systems of the energy storage modules are connected together. The busbar system 9A, 9B, 9C, 9D of each energy storage module is an AC current busbar system, and each energy storage module further comprises a DC current busbar system 11AA, 11AB, 11AC, 11AD whereto the battery unit 7A, 7B, 7C, 7D is connected to. In figure 1 the DC current busbar systems are connected with each other, although they do not need to be connected together. In other words, the DC current busbar systems can be separate in some other embodiments.

Further in the example of figure 1, the inverter unit 8A, 8B, 8C, 8D of each energy storage module is connected to the DC current busbar system and the AC current busbar system. The inverter converts the DC current to an AC (alternative current) current, and vice versa. One of the energy storage modules is a master module 2 comprising a control unit 12, and the other module/s is/are a submodule/s. The master module is arranged to control functioning of all energy storage modules and also arranged to be connectable to an outside system. There is a communication line/connection (not illustrated in the figures) among the modules, so that the a control unit 12 can drive the whole energy storage arrangement.

The busbar systems, more accurately their busbars, in the embodiment of figure 1 are connected together providing common busbar systems 9, 11 through the energy storage arrangement 1. The connections are made using connectors 10A, 10B, 10C, 10D having connector bars. The connectors 10A, 10B, 10C, 10D refers to the connections between the AC busbar systems 9A, 9B, 9C, 9D in figure 1, but the DC busbars systems of the modules can be connected also using the connectors. Although the DC busbar systems of the energy storage modules 1, 2, 3, 4, 5 in figure 1 are connected to each other providing the common DC busbar system 11, it is also possible that the DC busbar systems are not connected to each other as already said.

The connectors can be structured so that the energy storage modules are installed in one line so that the common busbar system is in one line. The connectors may also be formed so they have a U shape, in which case the energy storage modules are next to each other and the common busbars system has an undulating form.

The energy of the energy storage arrangement 1 can be delivered to a load or a grid 14 from the common AC busbar system 9 through a transformer 6. As said, one energy storage module 2 is arranged to be the master module comprising a control unit 12 to drive the whole energy storage arrangement. The control unit can be or comprise a PLC (Programmable Logic Controller). The master module is also the module through which the energy storage arrangement is connected outside, like to the transformer 6. As said the other modules are submodules 3, 4, 5 from the view of the main module 2. When the inverter units 8A, 8B, 8C, 8D are run to supply power into the battery units 7A, 7B, 7C, 7D, the power is supplied from the grid into the energy storage arrangement. Also in this example, the master module 2 is connected to a load / grid via a transformer 6. It is worth to mention that in some embodiments the transformer is not needed, and the master module can be directly connected to a load/grid.

It is worth to mention that figure 1 is a schematic drawing illustrating busbars systems in single lines, not showing lines for each phase or voltage levels. The DC busbar system can comprise at least two busbars for different potential levels. The AC busbar system comprises a busbar for each phase and maybe to a neutral/ground line.

As can be seen in figure 1, the energy storage arrangement can comprise at least one submodule 3, 4, 5. Figure 2 illustrates another schematic example of an energy storage arrangement comprising at least one further submodule. So, one further submodule 15 comprising a battery unit 71A and a DC current busbar system 11BA can be added into the energy storage arrangement. The DC current busbar system 11BA is connected to the DC current busbar system 11AA of the master module in the example of figure 2.

As can be seen, the energy storage arrangement can comprise other further submodules 16, 17, 18 comprising a battery unit 71B, 71C, 71D and a DC current busbar system 11BB, 11BC, 11BD. The DC current busbar systems of the further submodule 15 and the other further submodules 16, 17, 18 are connected together utilizing connectors 19A, 19B, 19C, 19D. The connected busbar systems form a common busbar system 11B. In this example of figure 2 there are eight energy storage modules where four 15, 16, 17, 18 of them do not have an inverter and an AC busbar system. The battery units 71A, 71B, 71C, 71D of these modules are connected to the busbar systems 11BA, 11BB, 11BC, 11BD of the modules.

A dashed line in figure 2 illustrates yet other examples of the energy storage arrangement how the modules without the inverters can be connected to the arrangement. It is possible that the submodule 15, called now as a second submodule 15, comprising said battery unit 71A and said DC current busbar system 11BA, is now connected through the DC current busbar system 11BA to the to the DC current busbar system 11AD of the submodule 5, which submodule is the furthest from the master module 2 when regarding the route of the electrical connection. Similarly, it is possible that the energy storage arrangement comprises other second submodules 16, 17, 18 comprising a battery unit 71B, 71C, 71D and a DC current busbar system 11BB, 11BC, 11BD. And the DC current busbar systems of the second submodule 15 and the other second submodules 16, 17, 18 are connected together.

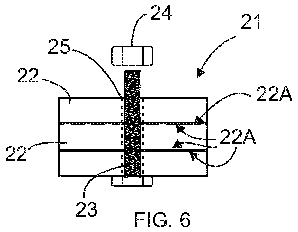

It is also possible that the busbar systems are scaled to a desired transmission capacity in each module. A number of the lines of the busbar systems in the figures illustrates this possibility. The connectors between the modules can be scaled with the similar way to a desired transmission capacity. Figure 6 illustrates an example of a busbar structure how the scaling can be realized. The AC busbar systems 9A, 9B, 9C, 9D and the DC current busbar systems 11AA, 11AB, 11AC, 11AD, 11BA, 11BB, 11BC, 11BD, can have busbars 21, where each busbar comprises at least one conductor bar 22 having connection surfaces 22A in order that the conductor bars are electrically connectable with each other.

The busbar systems also comprise fixing elements 23, 24 to connect and to keep the conductor bars 22 of each busbar with each other through the connection surfaces 22A. The fixing elements are bolts 23 and nuts 24 in the example of figure 6, and the conductor bars have holes 25 for the bolts. The cross-sectional area of each busbar 21 is determined by a number of the conductor bars 22 and a cross-sectional area of the conductor bar. The cross-sectional area of the busbar with the material of the conductor bars determines the power transmission capacity.

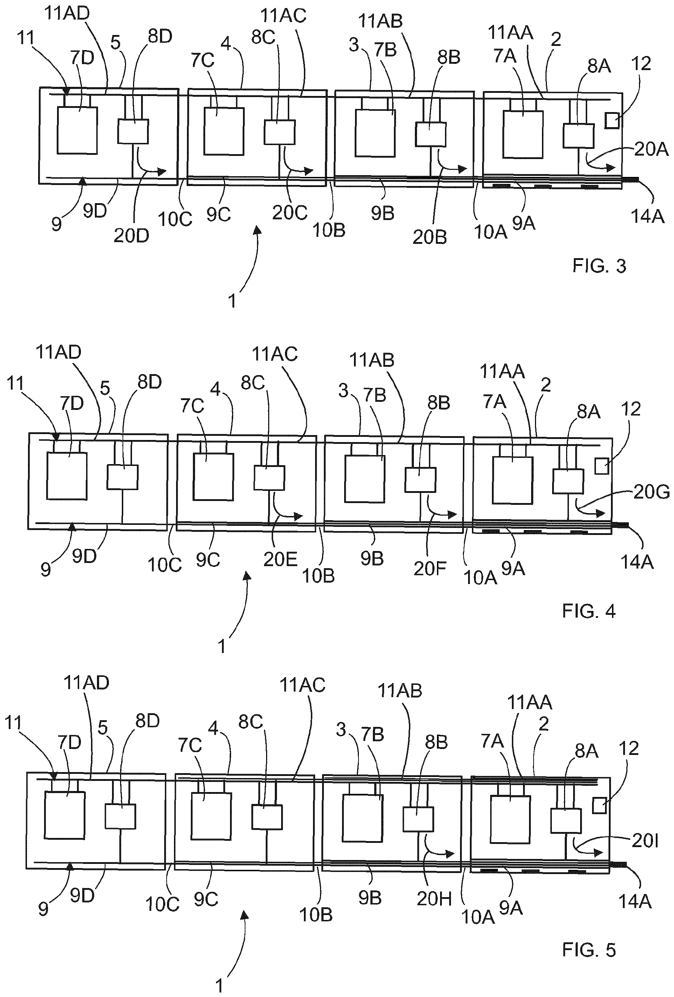

Figures 3, 4, and 5 illustrates examples of an energy storage arrangement when all inverters are running or some of the inverters are running.

In figure 3 all inverters 8A, 8B, 8C, 8D are driven so that they supply power from the corresponding DC current busbar system 11AA, 11AB, 11AC, 11AD to the corresponding AC current busbar system 9A, 9B, 9C, 9D. Arrows 20A, 20B, 20C, 20D illustrate power transmission through the inverters to the AC busbar systems and out of the energy storage arrangement. If the directions of the arrows are opposite, power is taken from the grid, and power is supplied through the inverters from the corresponding AC current busbar system to the corresponding DC current busbar system in the master module and the submodules. The DC busbar systems do not need to be connected together in the example of figure 3.

it is also possible only one inverter or some of the inverters are driven so that they supply power from the corresponding DC current busbar system 11AA, 11AB, 11AC, 11AD to the corresponding AC current busbar system 9A, 9B, 9C, 9D, or supply power from the corresponding AC current busbar system to the corresponding DC current busbar system in the master module and the submodules. In the example of figure 4, the inverters 8A, 8B, 8C supply power 20G, 20F, 20E from the corresponding DC current busbar system 11AA, 11AB, 11AC to the corresponding AC current busbar system 9A, 9B, 9C. In the example of figure 5, the inverters 8A, 8B supply power 20I, 20H from the corresponding DC current busbar system 11AA, 11AB to the corresponding AC current busbar system 9A, 9B. The DC busbar systems are connected together in the examples of figures 4 and 5. The common DC busbar system 11 provides many ways to drive the energy storage modules. All battery units 7A, 7B, 7C, 7D can be charged via at least one inverter, and energy stored in the battery units, can be supplied to the grid/load through at least one inverter 8A, 8B, 8C, 8D.

The energy storage arrangement according to the invention can also be realized so, that the submodule 5 with it's inverter, which submodule is the furthest from the master module 2, has a connector in order to connect the common AC busbar system 9 of the energy storage arrangement with a load. The load can be a local load, like a house, storage, etc. It is also possible that in this embodiment the master module 2, one of the at least one submodule 3, 4, 5 with it's inverter, or one of the connectors 10A, 10B, 10C among the master module and the at least one submodule comprises a switch in order to divide the common AC busbar system 9 into separated sections in case a malfunction. The malfunction can, for example, be a grid fault. When dividing the common AC busbar system, the energy storage modules which have an electrical connection with the connector of the submodule 5 being the furthest from the master module 2, can work as a short time reserve power for the load during the malfunction. The master module controls the functioning of the arrangement and the switching actions also in this embodiment.

The invention provides a flexible and scalable structure for the energy storage arrangement. Energy storage capacity can be increased easily by adding a new energy storage module or modules to an existing arrangement. Control capabilities are also very good.

As can be seen the invention can be realized in many ways. It is evident from the above that the invention is not limited to the embodiments described in this text but can be implemented in many other different embodiments within the scope of the independent claims.

## Claims

1. An energy storage arrangement 1 comprising energy storage modules (2, 3, 4, 5), wherein the energy storage modules comprise a battery unit (7A, 7B, 7C, 7D) and an inverter (8A, 8B, 8C, 8D), and a busbar system (9A, 9B, 9C, 9D), the busbar systems of the energy storage modules being connected together,
**characterised in that** the busbar system (9A, 9B, 9C, 9D) of each energy storage module is an AC current busbar system, and each energy storage module further comprises a DC current busbar system (11AA, 11AB, 11AC, 11AD) whereto the battery unit (7A, 7B, 7C, 7D) is connected to, and the inverter unit (8A, 8B, 8C, 8D) of each energy storage module is connected to the DC current busbar system and the AC current busbar system, and
one of the energy storage modules is a master module (2) comprising a control unit (12), and the other module/s is/are a submodule/s, the master module being arranged to control functioning of all energy storage modules and being arranged to be connectable to an outside system.

2. An energy storage arrangement according to claim 1, **characterised in that** the energy storage arrangement comprises at least one submodule (3, 4, 5).

3. An energy storage arrangement according to claim 2, **characterised in that** the energy storage arrangement comprises a further submodule (15) comprising a battery unit (71A) and a DC current busbar system (11BA), which DC current busbar system is connected to the DC current busbar system (11AA) of the master module.

4. An energy storage arrangement according to claim 3, **characterised in that** the energy storage arrangement comprises other further submodules (16, 17, 18) comprising a battery unit (71B, 71C, 71D) and a DC current busbar system (11BB, 11BC, 11BD), and the DC current busbar systems of the further submodule (15) and the other further submodules (16, 17, 18) are connected together.

5. An energy storage arrangement according to any of claim 1 - 4, **characterised in that** the DC current busbar systems of the master module (2) and the submodule/s (3, 4, 5) are connected together.

6. An energy storage arrangement according to claim 5, **characterised in that** the energy storage arrangement comprises a second submodule (15) comprising a battery unit (71A) and a DC current busbar system (11BA), which DC current busbar system is connected to the DC current busbar system (11AD) of the submodule (5), which submodule is the furthest from the master module (2).

7. An energy storage arrangement according to claim 6, **characterised in that** the energy storage arrangement comprises other second submodules (16, 17, 18) comprising a battery unit (71B, 71C, 71D) and a DC current busbar system (11BB, 11BC, 11BD), and the DC current busbar systems of the second submodule (15) and the other second submodules (16, 17, 18) are connected together.

8. An energy storage arrangement according to any of claim 1 - 7, **characterised in that** the AC busbar systems (9A, 9B, 9C, 9D) and the DC current busbar systems (11AA, 11AB, 11AC, 11AD, 11BA, 11BB, 11BC, 11BD), have busbars (21), where each busbar comprises at least one conductor bar (22) having connection surfaces (22A) in order that the conductor bars are electrically connectable with each other,
the busbar systems also comprising fixing elements (23, 24) to connect and to keep the conductor bars (22) of each busbar with each other through the connection surfaces (22A), and a cross-sectional area of each busbar (21) is determined by a number of the conductor bars (22) and a cross-sectional area of the conductor bar.

9. An energy storage arrangement according to any of claim 1 - 8, **characterised in that** all inverters (8A, 8B, 8C, 8D) are driven so that they supply power from the corresponding DC current busbar system (11AA, 11AB, 11AC, 11AD) to the corresponding AC current busbar system (9A, 9B, 9C, 9D), or supply power from the corresponding AC current busbar system to the corresponding DC current busbar system in the master module and the submodules.

10. An energy storage arrangement according to any of claim 1 - 8, **characterised in that** only one inverter or some of the inverters are driven so that they supply power from the corresponding DC current busbar system (11AA, 11AB, 11AC, 11AD) to the corresponding AC current busbar system (9A, 9B, 9C, 9D), or supply power from the corresponding AC current busbar system to the corresponding DC current busbar system in the master module and the submodules.

11. An energy storage arrangement according to any of claim 1 - 10, **characterised in that** the master module (2) is connected to a grid, directly or via a transformer (6).

12. An energy storage arrangement according to any of claim 1 - 11, **characterised in that** the submodule (5) with it's inverter, which is the furthest from the master module (2), has a connector in order to connect the common AC busbar system of the energy storage arrangement with a load.

13. An energy storage arrangement according to claim 12, **characterised in that** the master module (2), one of the at least one submodule (3, 4, 5) with it's inverter, or one of the connectors (10A, 10B, 10C) among the master module and the at least one submodule comprises a switch in order to divide the common AC busbar system (9) into separated sections in case a malfunction.
